# EUROPEAN PATENT APPLICATION

(11) **EP 1 026 821 A2**
(43) Date of publication of application: **09.08.2000**
(21) Application number: 00300751.5
(22) Date of filing: 31.01.2000
(51) Int. Cl.: H03C 5/00, H04N 5/44

(54) **Radio frequency modulator having isolation switches and signal path bypassing amplifier and modulator**

(30) Priority: 05.02.1999 JP 2912999
(71) Applicant: SHARP KABUSHIKI KAISHA, Osaka 545-8522 (JP)
(72) Inventor: Takeguchi, Mitsuhiro, Osaka-shi, Osaka 547-0043 (JP)
(74) Representative: Brown, Kenneth Richard

(57) **Abstract**

A radio frequency (RF) modulator for use with an antenna, a television receiver, and a video tape recorder or the like. The RF modulator contains a modulator which converts an input video signal and an input audio signal into a modulated signal having a predetermined channel frequency; an amplifier amplifying an input signal from an antenna input terminal; and a mixer which mixes the modulated signal with the input signal amplified by the amplifier to output a mixed signal from an antenna output terminal. A first switch is connected in parallel with the amplifier between the antenna input terminal and the antenna output terminal; a second switch is connected between the antenna input terminal and the amplifier; and a third switch is connected between the mixer and the antenna output terminal. When the amplifier and the modulator are not used, a signal path from the antenna input terminal to the antenna output terminal through the first switch can be formed and isolated from the amplifier and the modulator by turning the second and third switches off, so as to reduce power consumption and signal loss.

## Description

### BACKGROUND OF THE INVENTION

### Field of the Invention

The present invention relates to a radio frequency (RF) modulator. The RF modulator according to the present invention may be used, for example, in video tape recorders, satellite broadcasting receivers, and the like.

### Description of the Related Art

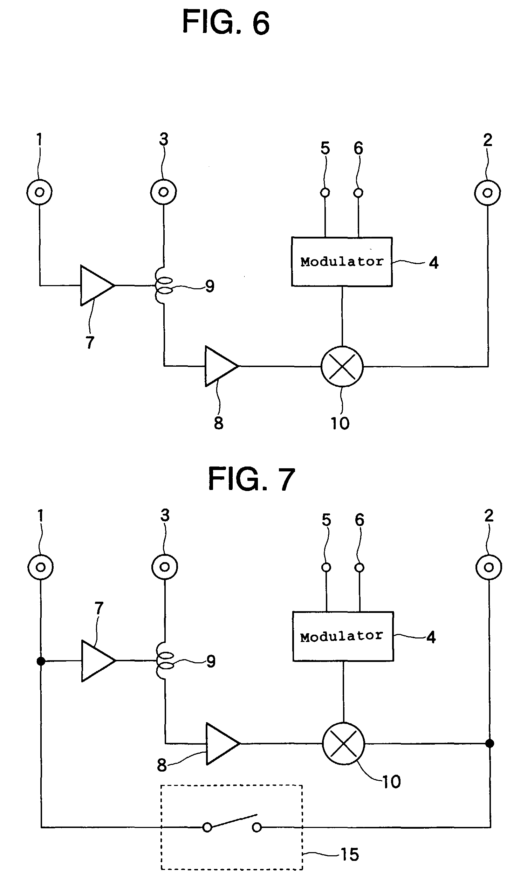

Conventionally, the construction of Fig. 6 is known as an RF modulator for use in the PAL (Phase Alternation by Line) color television system or the SECAM (séquential couleur á mémoire) system.

In the construction of Fig. 6, the antenna input terminal 1 is an input terminal, which is to be connected to an antenna, for receiving a television signal. The tuner output terminal 3 is to be connected with a tuner unit, for supplying a received television signal to the tuner unit. The tuner unit is installed in a video tape recorder. The antenna output terminal 2 is to be connected with an antenna terminal of an external television receiver, for outputting an amplified television signal, or a modulated signal. The amplified television signal is generated by amplifying by the amplifier 7 the television signal received through the antenna output terminal 2. The modulated signal is generated by the modulator 4 based on the video and audio signals respectively received through the video input terminal 5 and the audio input terminal 6. The modulated signal has a predetermined channel frequency.

The video input terminal 5 is to be connected with a video output terminal of the video tape recorder, for inputting the video signal, and the audio input terminal 6 is to be connected with an audio output terminal of the video tape recorder, for inputting the audio signal.

The television signal received through the antenna input terminal 1 is amplified by the amplifier 7, and is then distributed by the distributor 9 to the tuner output terminal 3 and the antenna output terminal 2. The signal distributed to the antenna output terminal 2 is amplified by the amplifier 8, and input into the mixer 10. The amplifier 8 may be dispensed with.

The video signal and the audio signal which are input from the video input terminal 5 and the audio input terminal 6 are converted by the modulator 4 to a high-frequency modulated signal, and input into the mixer 10. The mixer 10 is connected with the antenna output terminal 2 to output the modulated signal or the amplified television signal.

In the above RF modulator, even when the video tape recorder is not activated, i.e., even in a stand-by time, the path from the antenna input terminal 1 to the antenna output terminal 2 must be kept active for the television signal, so that the television signal can be displayed on the external television receiver. That is, the amplifiers 7 and 8 must be kept active even in the stand-by time of the video tape recorder, and therefore power consumption is increased.

In order to solve the above problem, Japanese Unexamined Utility Model Application No. 2-111946 discloses a technique as illustrated in Fig. 7. In the construction of Fig. 7, a switch 15 is connected in parallel with the amplifiers 7 and 8 between the antenna input terminal 1 and the antenna output terminal 2. The switch 15 is controlled to be off when the amplifiers 7 and 8 are activated, and to be on when the amplifiers 7 and 8 are inactivated. Thus, the television signal can pass through the construction of Fig. 7 from the antenna input terminal 1 to the antenna output terminal 2 even when an electric power is not supplied to the construction of Fig. 7.

However, in the above RF modulator of Fig. 7, significant signal loss occurs when the amplifiers 7 and 8 are inactivated, and the switch 15 is on, since the antenna input terminal 1 and the amplifiers 7 and 8 are respectively connected, and the mixer 10 and the antenna output terminal 2 are also connected.

### SUMMARY OF THE INVENTION

An object of the present invention is to provide a radio frequency (RF) modulator in which power consumption and signal loss during the stand-by time of the video tape recorder are reduced.

According to the present invention, there is provided a radio frequency modulator containing a modulator which converts an input video signal and an input audio signal into a modulated signal having a predetermined channel frequency; an amplifier amplifying an input signal from an antenna input terminal; a mixer which mixes the modulated signal with the input signal amplified by the amplifier to output a mixed signal from an antenna output terminal; a first switch connected in parallel with the amplifier between the antenna input terminal and the antenna output terminal; a second switch connected between the antenna input terminal and the amplifier; and a third switch connected between the mixer and the antenna output terminal.

In the above radio frequency modulator according to the present invention, the second switch may be controlled to be on when the amplifier is activated, and the second switch may be controlled to be off when the amplifier is inactivated. Thus, it is possible to prevent signal loss through the position of the second switch when the amplifier is inactivated.

In the above radio frequency modulator according to the present invention, the third switch may be controlled to be on when the modulator or the amplifier is activated, and the third switch may be controlled to be off when both of the modulator and the amplifier are inactivated. Thus, it is possible to prevent signal loss through the position of the third switch when both of the modulator and the amplifier are inactivated.

In the above radio frequency modulator according to the present invention, the first switch may be controlled to be off when the third switch is on, and the first switch may be controlled to be on when the third switch is off. Thus, it is possible to prevent signal loss through the position of the first switch when the third switch is on.

In the above radio frequency modulator according to the present invention, the first switch may contain a switch circuit using a plurality of field effect transistors, and a transistor which is connected between at least two field effect transistors among the plurality of field effect transistors. The transistor grounds a signal leaked from the modulator when the at least two field effect transistors are in an unconductive state. Thus, signal loss can be further suppressed.

### DESCRIPTION OF THE DRAWINGS

In the drawings:
Fig. 1 is a diagram illustrating the entire construction of the first embodiment of the present invention;
Fig. 2 is a diagram illustrating the entire construction of the second embodiment of the present invention;
Fig. 3 is a diagram illustrating the construction of the switch circuit in the third embodiment of the present invention;
Fig. 4 is a diagram illustrating the construction of the switch circuit in the fourth embodiment of the present invention;
Fig. 5 is a diagram illustrating the construction of the switch circuit in the fifth embodiment of the present invention;
Fig. 6 is a diagram illustrating a conventional RF modulator;
Fig. 7 is a diagram illustrating another conventional RF modulator;
Fig. 8 is a graph indicating the pass characteristics of the RF modulator of Fig. 1 according to the present invention;
Fig. 9 is a graph indicating the pass characteristics of the RF modulator of Fig. 1 according to the present invention;
Fig. 10 is a graph indicating the pass characteristics of the conventional RF modulator of Fig. 6 when the amplifiers are activated;
Fig. 11 is a graph indicating the pass characteristics of the conventional RF modulator of Fig. 6 when the amplifiers are activated;
Fig. 12 is a graph indicating the pass characteristics of the conventional RF modulator of Fig. 6 when the amplifiers are inactivated;
Fig. 13 is a graph indicating the pass characteristics of the conventional RF modulator of Fig. 6 when the amplifiers are inactivated;
Fig. 14 is a graph indicating the pass characteristics of the conventional RF modulator of Fig. 7 when the amplifiers are inactivated; and
Fig. 15 is a graph indicating the pass characteristics of the conventional RF modulator of Fig. 7 when the amplifiers are inactivated.

### DESCRIPTION OF THE PREFERRED EMBODIMENTS

The various embodiments of the present invention are explained below with reference to drawings. In the drawings referred to below, elements having the same reference numbers as Figs. 6 and 7 respectively function the same as the corresponding elements in Figs. 6 and 7, and therefore the explanations on such elements are not repeated below.

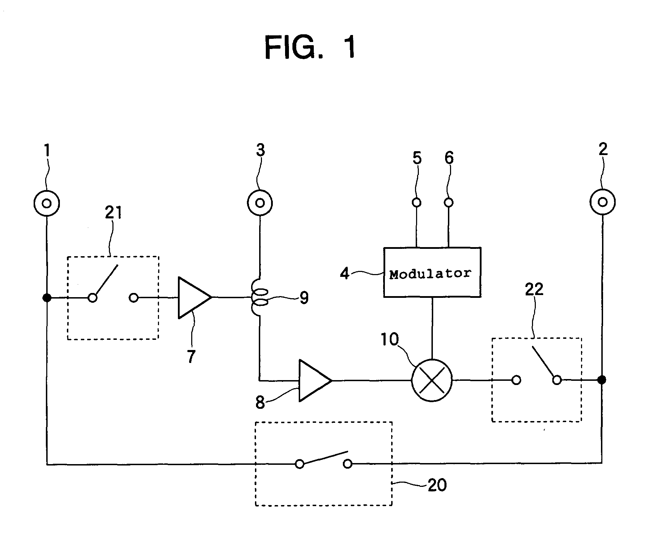

Fig. 1 is a diagram illustrating the entire construction of the first embodiment of the present invention. In the construction of Fig. 1, the first switch 20 is connected in parallel with the amplifiers 7 and 8 between the antenna input terminal 1 and the antenna output terminal 2, the second switch 21 is connected between the antenna input terminal 1 and the amplifier 7, and the third switch 22 is connected between the mixer 10 and the antenna output terminal 2.

When the amplifiers 7 and 8 are activated, the first switch 20 is turned off, and the second and third switches 21 and 22 are turned on, the signal received through the antenna input terminal 1 is output through the amplifiers 7 and 8 from the antenna output terminal 2. When the amplifiers 7 and 8 are inactivated, the first switch 20 is turned on, and the second and third switches 21 and 22 are turned off, the signal received through the antenna input terminal 1 is output through the first switch 20 from the antenna output terminal 2. In this case, the received signal can reach the antenna output terminal 2 without influence of the amplifiers 7 and 8 and the mixer 10.

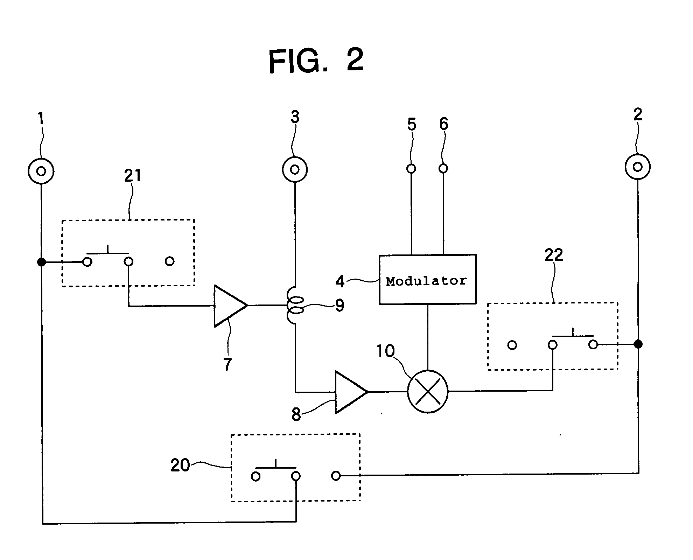

The above first, second and third switches 20, 21, and 22 may be realized by mechanical switches as illustrated in Fig. 2, which shows the states of the mechanical switches when the amplifiers 7 and 8 are activated.

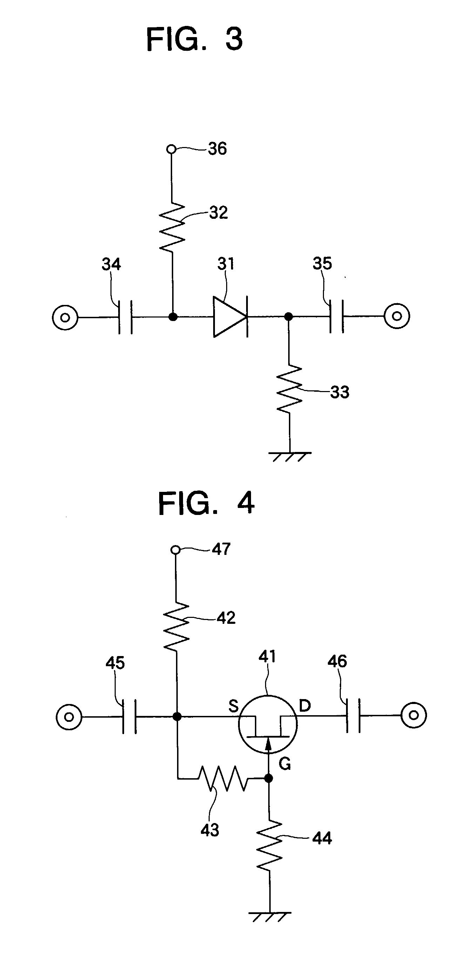

Fig. 3 shows a construction of a switch circuit which is used as each of the second and third switches 21 and 22 in the third embodiment of the present invention. In the construction of Fig. 3, when a certain voltage is applied to a power supply terminal 36, a current flows through the resistor 32, the switching diode 31, and the resistor 33. The internal resistance of the switching diode 31 decreases when a current flows therethrough. Therefore, when a certain voltage is applied to the power supply terminal 36, a signal can pass through the switching diode 31, i.e., the switch of Fig. 3 is turned on. When a certain voltage is not applied to the power supply terminal 36, no current flows through the switching diode 31, the internal resistance of the switching diode 31 increases, and therefore the switch of Fig. 3 is turned off. The amount of the current flowing through the switching diode 31 is controlled by the resistors 32 and 33. The capacitors 34 and 35 are DC blocking capacitors provided for preventing a flow of the switch control current into the antenna input terminal 1 or the antenna output terminal 2.

Fig. 4 shows the construction of an FET switch circuit which is used as the first switch 20 in the fourth embodiment of the present invention. In the construction of Fig. 4, the FET (field effect transistor) 41 is an n-channel FET performing a switching action. When no voltage is applied to the power supply terminal 47, the gate and the source of the FET 41 are at the same potential, and therefore a current flows between the source and the drain of the FET 41, i.e., the FET 41 is turned on. When a certain voltage is applied to the power supply terminal 47, the potential of the gate becomes lower than the potential of the source of the FET 41 due to voltage drop in the resistor 43, and therefore a current does not flow between the source and the drain of the FET 41, i.e., the FET 41 is turned off. The capacitors 45 and 46 are the DC blocking capacitors.

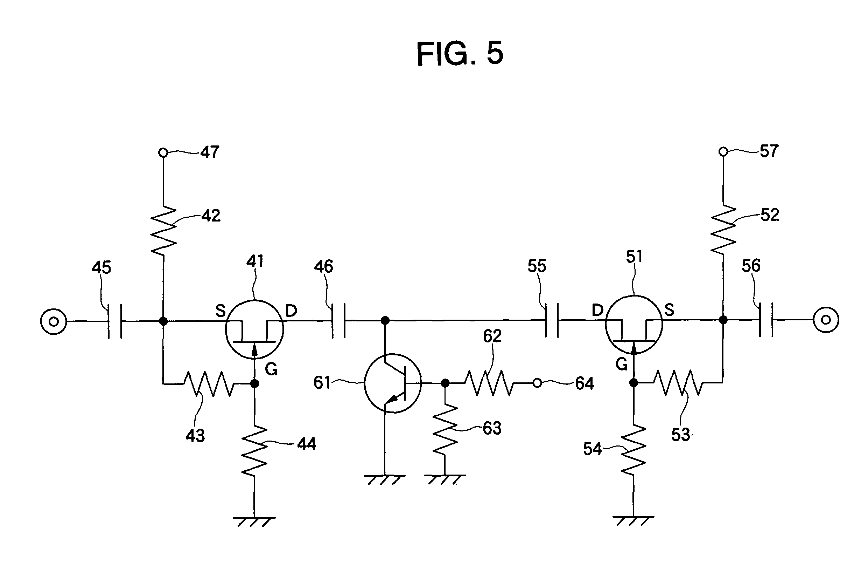

In the construction of Fig. 1, when the modulator 4 is activated, the third switch 22 is on, and the first switch 20 is off. If the first switch is an electronic switch, and the electronic switch does not achieve sufficient insulation, a portion of the output of the modulator 4 may leak through the first switch 20 to the antenna input terminal 1. In order to prevent such leakage, it is possible to lift the insulation level by providing more than one first switch, or connecting one or more transistors in the channel. The construction of Fig. 5 is one example of such provision.

Fig. 5 is a diagram illustrating the construction of the switch circuit in the fifth embodiment of the present invention. The FETs 41 and 51 in Fig. 5 each have the same function as the FET 41 in Fig. 4, the resistors 42 and 52 in Fig. 5 have the same function as the resistor 42 in Fig. 4, the resistors 43 and 53 in Fig. 5 have the same function as the resistor 43 in Fig. 4, the resistors 44 and 54 in Fig. 5 each have the same function as the resistor 44 in Fig. 4, the capacitors 45, 46, 55, and 56 each have the same function as the capacitors 45 and 46 in Fig. 4, and the power supply terminals 47 and 57 each have the same function as the power supply terminal 47 in Fig. 4. In addition, in the construction of Fig. 5, an NPN transistor 61 is connected to a path between the FETs 41 and 51, and the resistors 62 and 63 are connected to the base of the transistor 61. The resistor 62 is a protection resistor, and one end of the resistors 62 is another power supply terminal 64. The resistor 63 is provided so that the potentials of the base and the emitter of the transistor 61 become the same level when no voltage is applied to the power supply terminal 64.

Thus, when no voltage is applied to the power supply terminal 64, the potentials of the base and the emitter of the transistor 61 are the same level due to the provision of the resistor 63, the collector and the emitter become open, and therefore the transistor 61 does not influence the signal path between the FETs 41 and 51. When a certain voltage is applied to the power supply terminal 64, the potential of the base of the transistor 61 becomes higher than the potential of the emitter, and therefore a current flows from the collector to the emitter of the transistor 61, i.e., the transistor 61 is turned on. Therefore, it is possible to ground the signal leaked from the modulator 4 when the FETs 41 and 51 are in an unconductive state for blocking signals. Thus, the insulation level can be lifted.

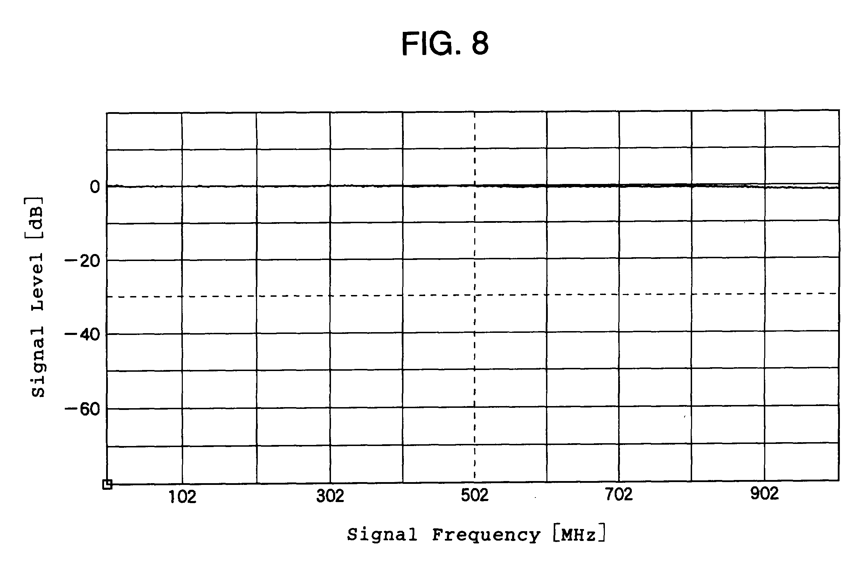

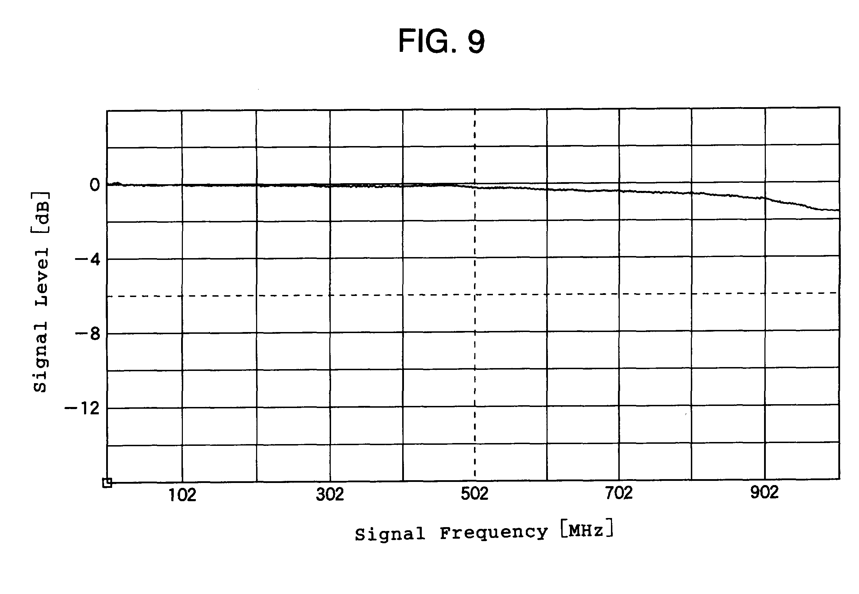

Figs. 8 to 15 are graphs indicating examples of the pass characteristics of the RF modulators according to the present invention and the conventional techniques. In each of the graphs, the abscissa indicates a signal frequency, and is calibrated in 100 MHz increments from 2 to 1002 MHz. The ordinate indicates a signal level, and is calibrated in 10 dB increments in Figs. 8, 10, 12, and 14, and in 2 dB increments in Figs. 9, 11, 13, and 15. The level of 0 dB corresponds to no signal loss.

Figs. 8 and 9 are graphs indicating the pass characteristics of the RF modulator of Fig. 1 when the amplifiers 7 and 8 are inactivated, the first switch 20 is on, and the second and third switches 21 and 22 are off. Figs. 8 and 9 show that signal loss is less than 2 dB.

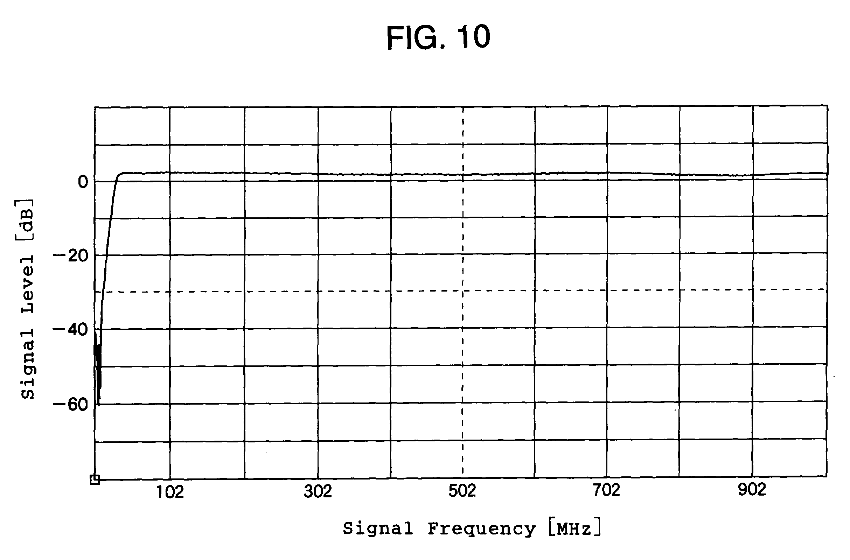

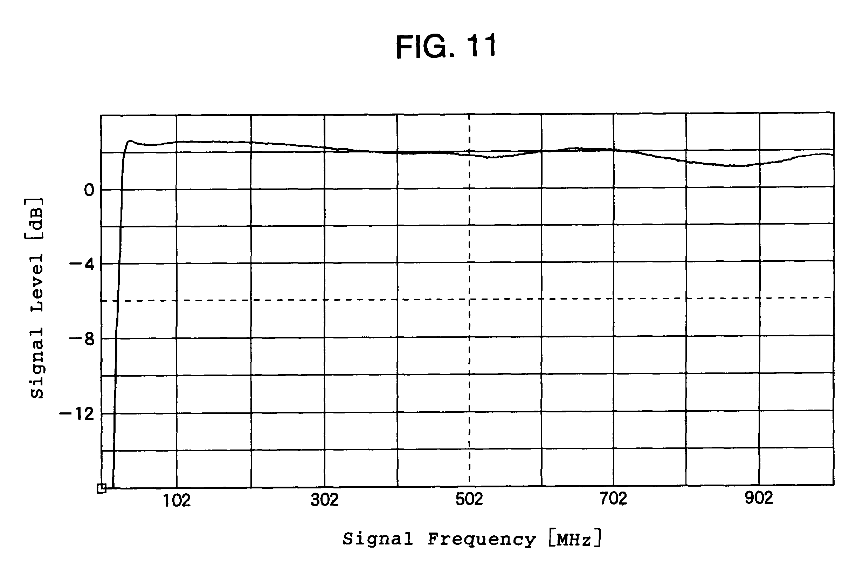

Figs. 10 and 11 are graphs indicating the pass characteristics of the conventional RF modulator of Fig. 6 when the amplifiers 7 and 8 are activated. Figs. 10 and 11 show the amplification of about 2 dB.

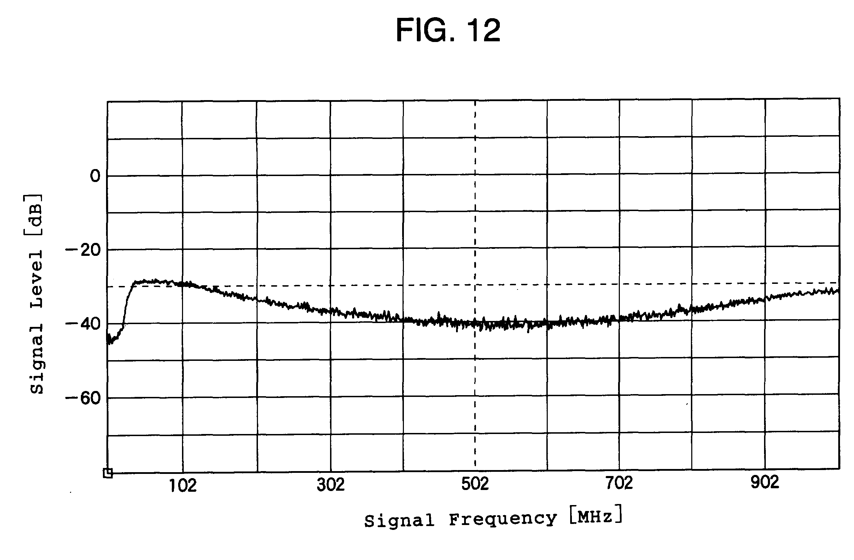

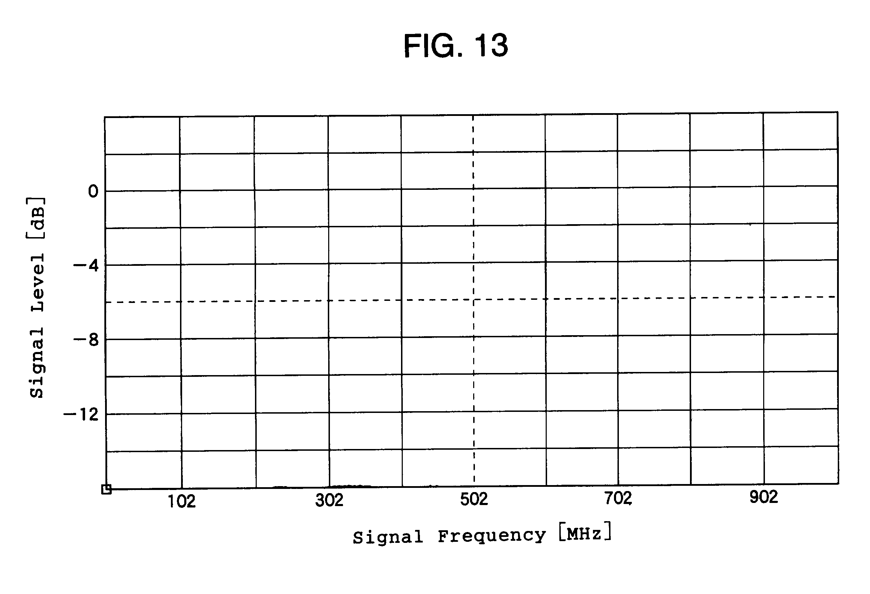

Figs. 12 and 13 are graphs indicating the pass characteristics of the conventional RF modulator of Fig. 6 when the amplifiers 7 and 8 are inactivated. Figs. 12 and 13 show signal loss of about 30 to 40 dB. In this situation, the television signal cannot be received by a television receiver connected to the antenna output terminal 2.

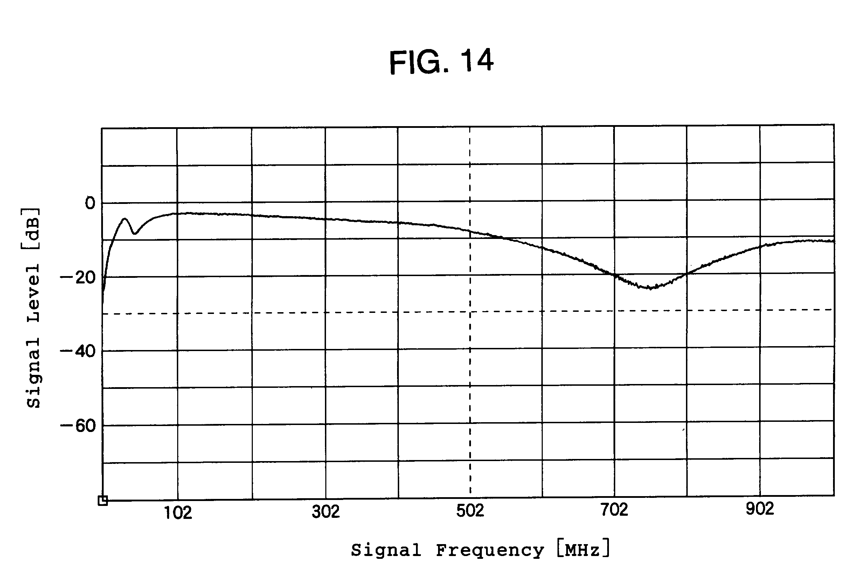

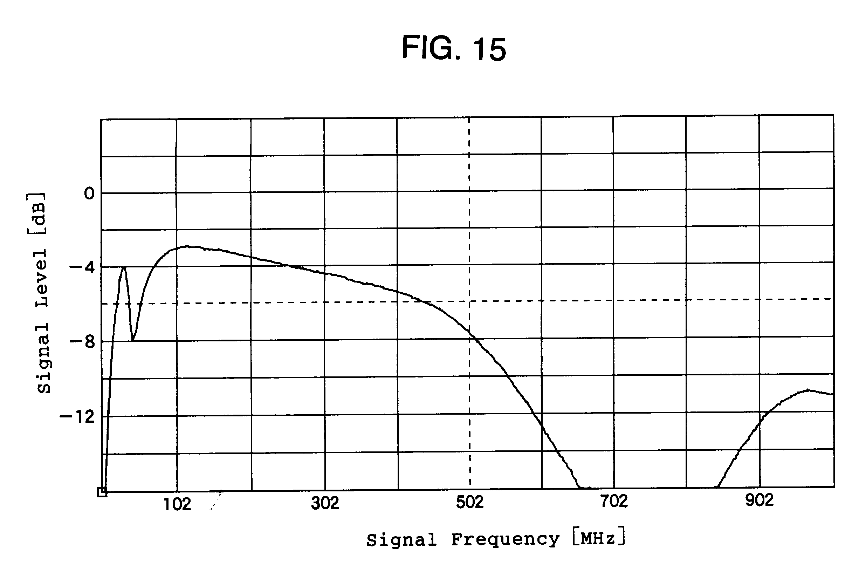

Figs. 14 and 15 are graphs indicating the pass characteristics of the conventional RF modulator of Fig. 7 when the amplifiers 7 and 8 are inactivated. As described before, in the construction of Fig. 7, the switch 15 is connected in parallel with the amplifiers 7 and 8 between the antenna input terminal 1 and the antenna output terminal 2. Figs. 14 and 15 show that signal loss in the construction of Fig. 7 is about 20 dB at a certain frequency, which is smaller than the signal loss in the construction of Fig. 6 as illustrated in Figs. 12 and 13, and much greater than the signal loss in the construction of Fig. 1. As explained before, it is considered that the signal loss in the construction of Fig. 7 is caused by the amplifiers 7 and 8 and the mixer 10.

Thus, according to the present invention, the power consumption and the signal loss in the stand-by time can be suppressed. In addition, the RF modulator according to the present invention has the following advantages (1) and (2):
(1) When unnecessary signals other than a desired signal are input through the antenna input terminal 1, and is then amplified by the amplifiers 7 and 8, a sum of and a difference between the unnecessary signals may be generated, and may interfere with the desired signal when the desired signal is received by the television receiver, which is connected to the antenna output terminal 2. However, when a user wishes to watch a first television program in a first television channel, and concurrently record a second television program in a second television channel in the construction of Fig. 1, the television signal of the first channel can bypass the amplifiers 7 and 8, and the tuner unit of the video tape recorder connected to the tuner output terminal 3 can receive a television signal of the second channel after amplified by the amplifier 7, when the amplifiers 7 and 8 is activated, the first and second switches 20 and 21 are turned on, and the third switch 22 is turned off. Thus, the television receiver can receive the desired television signal of the first channel from the antenna input terminal 1 without the above interference.
(2) When the user wishes to watch on the television receiver a playback video picture from the video tape recorder through the modulator 4 in the construction of Fig. 1, the amplifiers 7 and 8 should be inactivated, the first and second switches 20 and 21 should be turned off, and the third switch 22 should be turned on. In this configuration, the playback signal from the video tape recorder is converted by the modulator 4 into a modulated signal, and is supplied to the television receiver through the antenna output terminal 2. In this case, a current through the amplifiers 7 and 8 is reduced, and thus leakage of a signal through the amplifiers 7 and 8 back to the antenna input terminal 1 can be suppressed.

All of the contents of the Japanese patent application, No. 11-29129 are incorporated into this specification by reference.

All publications, patents and patent applications cited herein are incorporated herein by reference in their entirety.

## Claims

1. A radio frequency modulator comprising:
a modulator which converts an input video signal and an input audio signal into a modulated signal having a predetermined channel frequency;
an amplifier amplifying an input signal from an antenna input terminal;
a mixer which mixes said modulated signal with said input signal amplified by the amplifier to output a mixed signal from an antenna output terminal;
a first switch connected in parallel with said amplifier between said antenna input terminal and said antenna output terminal;
a second switch connected between said antenna input terminal and said amplifier; and
a third switch connected between said mixer and said antenna output terminal.

2. A radio frequency modulator according to claim 1, wherein said second switch is controlled to be on when said amplifier is activated, and said second switch is controlled to be off when said amplifier is inactivated.

3. A radio frequency modulator according to claim 1, wherein said third switch is controlled to be on when said modulator or said amplifier is activated, and said third switch is controlled to be off when said modulator and said amplifier are inactivated.

4. A radio frequency modulator according to claim 1, wherein said first switch is controlled to be off when said third switch is on, and said first switch is controlled to be on when said third switch is off.

5. A radio frequency modulator according to claim 1, wherein said first switch contains a switch circuit using a plurality of field effect transistors, and a transistor which is connected between at least two field effect transistors among the plurality of field effect transistors, where said transistor grounds a signal leaked from said modulator when said at least two field effect transistors are in an unconductive state.
